(19) Europäisches Patentamt
European Patent Office
Office européen des brevets

(11) **EP 3 617 238 A1**

(12) **EUROPEAN PATENT APPLICATION**

(43) Date of publication:
**04.03.2020 Bulletin 2020/10**

(51) Int Cl.:
**C08F 210/06** (2006.01)     **C08F 210/16** (2006.01)

(21) Application number: **18191076.1**

(22) Date of filing: **28.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1220 Vienna (AT)**

(72) Inventors:
• **WANG, Jingbo**
 **4021 Linz (AT)**

• **GAHLEITNER, Markus**
 **4021 Linz (AT)**
• **ALBRECHT, Andreas**
 **4021 Linz (AT)**
• **PARKINSON, Matthew**
 **1150 Woluwé-Saint-Pierre (BE)**
• **VANHOUTTE, Jeroen**
 **3130 Betekom (BE)**
• **BRAUN, Juliane**
 **4021 Linz (AT)**

(74) Representative: **Borealis AG**
**Borealis Polyolefine GmbH**
**IPR-Department**
**St.-Peter-Straße 25**
**4021 Linz (AT)**

(54) **PROPYLENE RANDOM COPOLYMER WITH SPECIFIC COMONOMER DISTRIBUTION**

(57)     The present invention is directed to a unimodal polypropylene random copolymer showing good balance between stiffness and impact at low haze. The unimodal polypropylene random copolymer has 2.0 - 5.0 wt.-% of ethylene as comonomer, has a Melt Flow Rate determined according to 1801133 at 230 °C and 2.16 kg (MFR230/2.16) in the range of 8.0 - 60.0 g/10 min and is characterized by a Comonomer Distribution (CD) at 25 % peak height of at least 13.0 K.

The present invention is also directed to the use or said new polypropylene random copolymer for producing injection moulded articles as well as articles made from said polypropylene random copolymer and a process for producing said unimodal propylene random copolymer.

EP 3 617 238 A1

## Description

The present invention is directed to a new polypropylene random copolymer showing good balance between stiffness and impact at low haze.

The present invention is also directed to the use of said new polypropylene random copolymer for producing injection moulded articles as well as articles made from said polypropylene random copolymer.

Furthermore the invention is directed to a process for producing the polypropylene random copolymer.

## Background Information

Polypropylene random copolymers are widely used in different applications, e.g. thin wall packaging, films, houseware, etc., where a combination of good mechanical and optical properties are required.

Improving both good mechanical properties and optical properties at the same time is normally difficult due to various reasons:

Introducing higher amounts of comonomer (e.g. ethylene) will clearly improve the optical properties but with the cost of reduction in stiffness.

Another aspect of copolymerization is the comonomer insertion. Due to the presence of multi-active centres in normal Ziegler-Natta catalysts (ZN), the comonomer insertion is always problematic and the ethylene content is enhanced in the oligomer fraction, leading to higher XCS and bad haze. Therefore, well controlled insertion of comonomer is crucial to get the combination of good optical and mechanical properties.

Polymers with higher stiffness can be converted into articles with lower wall thickness, allowing material and energy savings. Polymers with good optical properties, especially low haze, are desired for consumer related articles to provide good "see-through" properties on the content of the packed goods. Polymers with good impact behaviour are also desired in consumer related articles to keep the content safe even when dropped. Good processability is required to ensure short production cycles and/or uniform filling of the moulds. This is especially important in the case of multi-cavity tools, complex tool design, long flow path or a high ratio of flow path to wall thickness, as e.g. given in thin walled articles.

The demands can be challenging, since many polymer properties are directly or indirectly interrelated, i.e. improving a specific property can only be accomplished at the expense of another property. Stiffness can for instance be improved by increasing the crystallinity and/or the relative amount of homopolymer within the composition. Consequently, the material becomes more brittle, thereby resulting in poor impact properties and/or worse optical properties. Impact behaviour or optical properties can be improved by increasing the comonomer content. Consequently, the material will become softer and loose on stiffness. Thus, impact or optical properties such as haze behave in a conflicting manner to stiffness.

Processability is linked with the viscosity or flowability of a polymer: especially for thin walled articles, complex tool design or fast production cycle a good flowability in the sense of a high MFR is essential. At the same time it is well known, that polymers with high MFRs tend to become more brittle in the sense of low impact strength, especially at low temperatures.

## Description of the prior art:

EP17171704 discloses unimodal propylene random copolymers with 2.0 - 4.5 wt.-% of ethylene as comonomer, having improved resistance against $\gamma$-irradiation.

It discloses polymers with a specific comonomer distribution determined via a-TREF, produced with a Ziegler Natta catalyst.

WO 2016/135107 discloses propylene-ethylene random copolymers with improved long-term mechanical properties, especially improved impact strength retention. It is not concerned with optical properties nor dealing with optomechanical ability. The polymers described are bimodal and contain a polymeric nucleating agent.

WO 2016/135108 describes a tough Reactor-nucleated EP random copolymer with high impact strength. The polymers disclosed have a very high MFR and contain polymeric nucleating agents. The disclosure is not concerned with optical properties nor dealing with optomechanical ability. The polymers described are bimodal and contain a polymeric nucleating agent.

EP 2610274 A1 discloses propylene random copolymers having a low randomness based on NMR-measurements. The application does not disclose any details on interchain comonomer distribution.

EP 2999721 B1 claims propylene random copolymers which are bimodal in view of their comonomer distribution and have an impact strength of at most 4.5 kJ/m$^2$.

None of these prior art documents describes polypropylene compositions showing satisfactory combination of good processability with excellent mechanical and optical performance, nor any such polypropylene compositions which can be produced in a simple and economical way.

## Object of the invention

There is hence a strong need for improved materials which have good or improved stiffness, high impact resistance, good transparency and good flowability.

The object of the present invention is to provide a propylene random copolymer which shows improved stiffness, improved impact and good optical behaviour in the sense of a low haze.

Further, it was an object of the present invention to provide a material which gives a good, well-balanced overall performance on optical and mechanical properties, namely stiffness and impact.

Accordingly, it was an object of the present invention to provide a propylene random copolymer having good optomechanical ability (OMA).

Within this application the optomechanical ability (OMA) is understood as the product of Flexural Modulus and Charpy notched impact strength (NIS), divided by value for Haze on 1 mm thick injection moulded plaques ($Haze_1$), namely:

$$OMA = \frac{\text{Flexural modulus [MPa]*NIS} \left[\frac{kJ}{m^2}\right]}{Haze_1[\%]} \qquad (I)$$

The invention is based on the surprising finding that the above mentioned object can be achieved by providing a unimodal propylene random copolymer having a specific comonomer insertion, in particular a specific comonomer distribution (CD) among the chains, which can be determined via analytical temperature rising elution fractionation (a-TREF).

It was further found that the present solution overcomes the problems of the prior art by a polymer, which can be produced in a simplified way, namely a one-step polymerization process, resulting in a unimodal propylene random copolymer.

A particular target of the present invention was to provide a unimodal propylene random copolymer which shows improved stiffness, impact and optical as well as optomechanical behaviour and being produced in a simplified way.

In particular it was found, that the object of the invention can be solved by a unimodal polypropylene random copolymer having 2.0 - 5.0 wt.-% of ethylene as comonomer, having a Melt Flow Rate determined according to ISO1133 at 230 °C and 2.16 kg (MFR230/2.16) in the range of 8.0 - 60.0 g/10 min and being characterized by a Comonomer Distribution (CD) at 25 % peak height of at least 13.0 K.

In a preferred embodiment, the invention relates to articles comprising said unimodal propylene random copolymer.

In a similar preferred embodiment, the invention relates the use of aforementioned polymer for producing injection moulded or extruded articles or packaging articles as well as the use of said articles for packaging, alimentary, diagnostic or pharmaceutical purposes.

In a special embodiment, the present invention covers a process for producing the unimodal propylene random copolymer of the present invention.

The unimodal propylene random copolymer of the present invention shows especially a narrower comonomer distribution (CD), which can be observed by a narrow profile in analytical temperature rising elution fractionation (a-TREF). This is reflected in a narrow peak, expressed by lower temperature difference ($\Delta T$) at 25 % Peak height and lower differences of the temperatures, when 20 and 80 wt.-% of the polymer sample have eluted ($T_{80}$ - $T_{20}$ values).

Without being bound to theory, inventors believe that this specific comonomer insertion provides the basis for the specific mechanical properties, especially the pronounced optomechanical ability (OMA).

## Detailed description:

Definition of interchain and intrachain properties:

Within the present application special focus should be paid to differentiate between interchain and intrachain properties: The interchain distribution of the comonomer is captured by the CD-parameter via analytical TREF (a-TREF) analysis and can describe differences in the comonomer distribution from one chain (or fraction) to others, depending on their respective elution temperatures.

The intrachain distribution is usually described via NMR, giving an average picture of the comonomers within the chains of the entire polymer sample without taking into account differences from one chain (fraction) to the other.

**Polymer**

The unimodal propylene random copolymer of the present invention comprises ethylene as comonomer. Preferably, the unimodal propylene random copolymer consists of propylene and ethylene as sole comonomer. It is understood within this application, that the wording of "consists" still allows the presence of up to 3.0 wt.-% of polymers, introduced e.g. via carriers for masterbatches, or the like.

The ethylene content of the unimodal propylene random copolymer may be in the range of 2.0 - 5.0 wt.-%, preferably in the range of 2.3 - 4.7 wt.-%, more preferably in the range of 2.6 - 4.4 wt.-%.

The MFR230/2.16 of the unimodal propylene random copolymer according to ISO1133 of the unimodal propylene random copolymer may be in the range of 8.0 - 60.0 g/10min, preferably in the range of 9.0 - 55.0 g/10min, more preferably in the range of 10.0 - 50.0 g/10min.

The amount of fraction soluble in cold xylene (XCS) of the unimodal propylene random copolymer of the present invention may be in the range of 6.5 - 13.0 wt.-%, preferably in the range of 7.0 - 12.0 wt.-%, more preferably in the range of 7.2 - 11.5 wt.-%.

The molecular weight (Mw) of the unimodal propylene random copolymer of the present invention may be in the range of 150 - 300 kg/mol, preferably in the range of 180 - 290 kg/mol, more preferably in the range of 200 - 285 kg/mol.

The unimodal propylene random copolymer of the present invention is unimodal in view of the molecular weight distribution (MWD). It is further unimodal in view of its comonomer distribution.

The form of the molecular weight distribution curve, i.e. the appearance of the graph of the polymer weight fraction as a function of its molecular weight, of such a unimodal polymer will show one distinct maximum. The MWD, being the ratio of Mw/Mn may be in the range of 3.5 - 6.5, preferably in the range of 4.0 - 6.0.

The unimodal propylene random copolymer according to this invention is not only unimodal, but also preferably monophasic. Accordingly it is preferred that the unimodal propylene random copolymer of the present invention does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures. Accordingly it is preferred that the propylene copolymer (R-PP) according to this invention has no glass transition temperature below (-30) °C, preferably below (-25) °C, more preferably below (-20) °C.

Preferably the unimodal propylene random copolymer according to this invention has been produced in the presence of a Ziegler-Natta catalyst. The catalyst influences in particular the microstructure of the polymer. In particular, polypropylenes prepared by using a metallocene catalyst provide a different microstructure compared to polypropylenes prepared by using Ziegler-Natta (ZN) catalysts. The most significant difference is the presence of regio-defects in metallocene-made polypropylenes which is not the case for polypropylenes made by Ziegler-Natta (ZN). The regio-defects can be of three different types, namely 2,1-erythro (2,1e), 2,1-threo (2,1t) and 3,1 defects. A detailed description of the structure and mechanism of formation of regio-defects in polypropylene can be found in Chemical Reviews 2000, 100(4),pages 1316-1327.

The term "2,1 regio defects" as used in the present invention defines the sum of 2,1 erythro regio-defects and 2,1 threo regio-defects.

Accordingly it is preferred that the unimodal propylene random copolymer according to this invention has 2,1 regio-defects, like 2,1 erythro regio-defects, of at most 0.4 %, more preferably of at most 0.3 %, still more preferably of at most 0.2 %, determined by $^{13}$C-NMR spectroscopy. In one specific embodiment no 2,1 regio-defects, like 2,1 erythro regio-defects, are detectable for the unimodal propylene random copolymer.

**Interchain characteristics**

**Comonomer distribution (CD)**

The unimodal propylene random copolymer of the present invention may be characterized by a specific Comonomer Distribution (CD).

The Comonomer Distribution (CD) is defined as the temperature difference (width of the peak) at 25 % peak height.

The Comonomer Distribution as $\Delta T$ at 25% peak height of the present invention is at least 13.0 K, preferably in the range of 13.0 - 25.0 K , more preferably in the range of 13.2 - 23.0 K.

## Molecular weight(s) and Distributions

The present invention can be characterized by various properties, especially Mw, Mn, MWD or Mz of fractions eluting at specific temperatures.

Accordingly, $Mw_{(T)}$, $MWD_{(T)}$, $Mz_{(T)}$, indicate the molecular weight, Molecular weight distribution or Mz of the fraction eluting at (T °C).

The unimodal propylene random copolymer of the present invention may be characterized by a specific comonomer incorporation and comonomer distribution. In particular, the unimodal propylene random copolymer of the present invention can be characterized by a broader molecular weight distribution of the TREF-fraction eluting at 30 °C, denominated as $MWD_{(30\ °C)}$, compared to the one eluting at 106°C, denominated as $MWD_{(160\ °C)}$.

More preferably the $MWD_{(30\ °C)}$ may be in the range of 6.0 - 20.0 [-], preferably in the range of 6.5 - 18.0 [-], more preferably in the range of 7.0 - 15.0 [-].

The $MWD_{(106\ °C)}$ may be in the range of 1.5 - 7.0 [-], preferably in the range of 2.0 - 6.0 [-], more preferably in the range of 2.4 - 5.0 [-].

The unimodal propylene random copolymer of the present invention can be further characterized by a specific ratio of the $MWD_{(30\ °C)}$ to the $MWD_{(106\ °C)}$.

Preferably, the $MWD_{(30\ °C)}$ is higher than the $MWD_{(106\ °C)}$.

More preferably, the ratio of the $MWD_{(30\ °C)}/ MWD_{(106\ °C)}$ may be in the range of 2.0 - 10.0 [-], preferably in the range of 2.2 - 8.0 [-], more preferably in the range of 2.4 - 6.0 [-].

The unimodal propylene random copolymer of the present invention can be characterized by a specific comonomer incorporation and comonomer distribution, which is featured by higher Mz-values of the fractions eluting at 30 °C ($Mz_{(30\ °C)}$) or 106 °C ($Mz_{(106\ °C)}$) than known in the art, in particular higher values of the $Mz_{(30\ °C)}$ fraction.

The $Mz_{(30\ °C)}$ may be in the range of 150 - 2000 kg/mol, preferably in the range of 180-1600 kg/mol, more preferably in the range of 200 - 1500 kg/mol.

The $Mz_{(106\ °C)}$ may be in the range of 400 - 1500 kg/mol, preferably in the range of 500 - 1300 kg/mol, more preferably in the range of 600 - 1200 kg/mol.

Furthermore, the unimodal propylene random copolymer of the present invention has a high or higher ratio of the Mz values of the fractions eluting at 30 °C and 106 °C ($Mz_{(30\ °C)}/Mz_{(106\ °C)}$).

Said ratio of ($Mz_{(30\ °C)}/Mz_{(106\ °C)}$) may be in the range of 0.20 to 2.00, preferably in the range of 0.24 to 1.85, more preferably in the range of 0.26 to 1.70.

In a particular preferred embodiment the $Mz_{(30\ °C)}/Mz_{(106\ °C)}$ is in the range of 0.40 to 2.0, such as 0.50 to 1.85, like 0.60 to 1.70.

$Mw_{(30\ °C)}$ may be in the range of 25 - 100 kg/mol, preferably in the range of 30 - 95 kg/mol, more preferably in the range of 40 - 90 kg/mol.

$Mw_{(106\ °C)}$ may be in the range of 150 - 600 kg/mol, preferably in the range of 180 - 500 kg/mol, more preferably in the range of 210 - 400 kg/mol.

The $T_{80}$-$T_{20}$ value determines the broadness of the comonomer distribution.

The $T_{80}$-$T_{20}$ may be in the range of 10.0 to 35.0, preferably in the range of 15.0 to 30.0.

## Isolated Ethylene sequences I (E)

The unimodal propylene random copolymer can be characterized by its relative content of isolated to block ethylene sequences (I(E).

The I(E) content [%] is defined by equation (II)

$$I(E) = \frac{fPEP}{fEEE + f\,PEE + fPEP} * 100 \qquad (II)$$

Wherein

I(E) is the relative content of isolated to block ethylene sequences in [%];
fPEP is the mol fraction of propylene/ethylene/propylene sequences (PEP) in the sample;
fPEE is the mol fraction of propylene/ethylene/ethylene sequences (PEE) and of ethylene/ethylene/propylene sequences (EEP) in the sample;
fEEE is the mol fraction of ethylene/ethylene/ethylene sequences (EEE) in the sample wherein all sequence concentrations being based on a statistical triad analysis of $^{13}$C-NMR data.

The I(E) of the unimodal propylene random copolymer of the present invention may be in the range of 65.0 - 80.0, preferably in the range of 66.0 - 79.0, more preferably in the range of 66.50 - 78.0.

The unimodal propylene random copolymer of the present invention may further be characterized by a specific correlation of the amount of PEP insertion as determined via NMR and its comonomer content, especially its ethylene content.

The unimodal propylene random copolymer of the present invention fullfills the following inequation:

$$I(E)\ [\%] > 90.0 - 6 * C2\ [wt.-\%] \qquad (III\ a)$$

Wherein

I(E) denominates the relative content of isolated to block ethylene sequences as defined above,
C2 denominates the ethylene content [wt.-%] as determined via NMR.

Preferably, the unimodal propylene random copolymer of the present invention fullfills the following inequation:

$$I(E)\ [\%] > 91.0 - 6 * C2\ [wt.-\%] \qquad (III\ b)$$

**Intrachain characteristics:**

Konig B

The unimodal propylene random copolymer of the present invention may have a Koenig B value of least 0.75, preferably in the range of 0.75 - 0.95, more preferably in the range of 0.78 - 0.90.

**Nucleation**

The unimodal propylene random copolymer may comprise one or more nucleating agents, like a first and a second nucleating agent.
Said one or first nucleating agent can be selected from the groups (i) to (v) as given below:

(i) salts of monocarboxylic acids and polycarboxylic acids, e.g. sodium benzoate or aluminum tert-butylbenzoate; or 1,2-cyclohexane dicarboxylicacid Ca-salt, of which the 1,2-cyclohexane dicarboxylicacid Ca-salt is especially preferred;
(ii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and hydroxybis (2,4,8,10-tetra-tert- butyl-6-hydroxy-12Hdibenzo(d,g)(1,3,2) dioxaphosphocin 6-oxidato) aluminium, wherein hydroxybis (2,4,8,10-tetra-tert-butyl-6-hydroxy-12H-dibenzo(d,g)(1,3,2) dioxaphosphocin 6-oxidato) aluminium is preferred;
(iii) crystalline polymers, like poly(vinyl cyclohexane) (PVCH), poly(4-methyl pentene-1) (P4MP) and poly(tetrafluoro ethylene), where PVCH is preferred;
(iv) sorbitol derivatives, e.g. di(alkylbenzylidene)sorbitols as 1,3:2,4-dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6;5,7-bis-O-[(4-propylphenyl)methylene] nonitol; and
(v) benzene-trisamides like substituted 1,3,5-benzenetrisamides as N,N',N''-tris-tert-butyl-1,3,5- benzenetricarboxamide, N,N',N''-tris-cyclohexyl-1,3,5-benzene-tricarboxamide and N-[3,5-bis-(2,2-dimethyl-propionylamino)-phenyl]-2,2-dimethyl-propionamide.

It is especially preferred, that the one or first nucleating agent comprised by the unimodal propylene random copolymer of the present invention is a soluble nucleating agent as defined in (iv) or (v) above.

Especially preferred are soluble nucleating agents selected from 1,3:2,4- dibenzylidene sorbitol, 1,3:2,4-Bis(3,4-dimethylbenzylidene) sorbitol, 1,2,3-trideoxy-4,6;5,7-bis-O-[(4-propylphenyl)methylene] nonitol and N-[3,5-bis-(2,2-dimethyl-propionylamino)-phenyl]-2,2-dimethyl-propionamide.

The unimodal propylene random copolymer of the present invention may comprise 500 - 3000 ppm of said one or first nucleating agent, which is preferably a soluble nucleating agent.
More preferably the one or first nucleating agent is present in ranges of 1000 - 2500 ppm, such as 1500 - 2200 ppm, more preferably in the range of 1600 - 2000 ppm.

The unimodal propylene random copolymer of the present invention may further comprise further nucleating agents.

The unimodal propylene random copolymer of the present invention may preferably comprise a second nucleating agent. Said further or second nucleating agent(s) may be selected from a group other than group (iv) as listed above. It is preferably selected from groups (i) to (iii) or (v) as given above, wherein polymeric nucleating agents as cited in (iii) given above are particularly preferred.

It is especially preferred, that the further or second nucleating agent is poly(vinyl cyclohexane) (PVCH).

The nucleating agent(s) may be incorporated into the unimodal propylene random copolymer by any conventional method, like as pure substance, blended with other components or via masterbatch technology.

In case of polymeric nucleating agent, it is preferably incorporated via Masterbatch technology:

The unimodal propylene random copolymer of the present invention is first produced in the absence of a polymeric nucleating agent and is then blended mechanically with polymers, which already contain the polymeric nucleating agent in order to introduce the polymeric nucleating agent into the unimodal propylene random copolymer. It is envisaged in the present invention, that the masterbatch comprising the polymeric nucleating may also comprise further additives, like stabilizers, or other nucleating agents, such as the soluble nucleating agent.

The amount of the polymeric nucleating agent within the masterbatch may be in a range of 10 -150 ppm, like 20 - 80 ppm. The amount of the masterbatch in the unimodal propylene random copolymer can be in the range of 0.5 - 20 wt.-%, like 1.0 - 15.0 or 1.5 - 10 wt.-%.

The amount of polymeric nucleating agent in the unimodal propylene random copolymer may be in the range of 0.1 ppm to 50 ppm, preferably in the range of 0.3 - 30 ppm, more preferably in the range of 0.5 to 20 ppm.

The unimodal propylene random copolymer may be characterized by its crystallisation and melting temperatures.

The crystallisation temperature (Tc) may be in the range of 110 - 130 °C, preferably in the range of 115 - 128 °C, more preferably in the range of 118 - 126 °C.

The unimodal propylene random copolymer may be further characterized by one or more, preferably two distinct melting temperatures.

A first melting temperature (Tm1) may be at least 145 °C, or at most 155 °C. Said second melting temperature may be in the range of 146 - 155 °C, preferably in the range of 147 - 153 °C.

A further, second melting temperature (Tm2) may be in the range of below 145 °C, preferably in the range of 130 - 142 °C, more preferably in the range of 132 - 138 °C. The melting enthalpy of the first melting peak (Hm1) may be in the range of 20 - 60 J/g, preferably in the range of 22 - 50 J/g, more preferably in the range of 23 - 40 J/g. Melting enthalpy of the second melting peak (Hm2) may be in the range of 45 - 65 J/g, preferably in the range of 50 - 63 J/g, more preferably in the range of 52 - 60 J/g.

**Catalyst:**

A unimodal propylene random copolymer obtained by a Ziegler-Natta catalyst means that the unimodal propylene random copolymer is obtained by polymerizing propylene and ethylene in the presence of a Ziegler Natta catalyst.

This Ziegler-Natta catalyst can be any stereo-specific Ziegler-Natta catalyst for propylene polymerization, which preferably is capable of catalysing the polymerization and copolymerization of propylene and comonomers at a pressure of 500 to 10000 kPa, in particular 2500 to 8000 kPa, and at a temperature of 40 to 110°C, in particular of 60 to 110°C. Preferably, the Ziegler-Natta catalyst comprises a high-yield Ziegler-Natta type catalyst including an internal donor component. Such high-yield Ziegler-Natta catalysts can comprise a succinate, a diether, etc., or mixtures therefrom as internal donor (ID) and are for example commercially available for example from LyondellBasell under the Avant ZN trade name.

Examples of the Avant ZN series are Avant ZN 126 and Avant ZN 168. Avant ZN 126 is a Ziegler-Natta catalyst with 3.5 wt% titanium and a diether compound as internal electron donor, which is commercially available from LyondellBasell. Avant ZN 168 is a Ziegler-Natta catalyst with 2.6 wt % titanium and a succinate compound as internal electron donor, which is commercially available from LyondellBasell. A further example of the Avant ZN series is the catalyst ZN180M of Basell.

**Mechanical properties**

The unimodal propylene random copolymer of the present invention shows improved stiffness, improved impact and good optical behaviour in the sense of a low haze. Further the unimodal propylene random copolymer gives a good, well balanced overall performance on optical and mechanical properties, namely stiffness and impact. Additionally, the unimodal propylene random copolymer of the present invention has good optomechanical ability (OMA).

The Flexural Modulus of the unimodal propylene random copolymer of the present invention when determined according to ISO178 may be at least 850 MPa, or in the range of 850 - 1250 MPa, preferably in the range of 900 - 1200 MPa.

The Notched impact strength (Charpy NIS 23 °C) of the unimodal propylene random copolymer of the present invention when determined according to ISO179/1eA at +23 °C may be in the range of at least 5.0 kJ/m$^2$, preferably in the range of 5.0 - 10.0 kJ/m$^2$.

The Haze$_1$ of the unimodal propylene random copolymer of the present invention when determined according to ASTM 1003 on 1 mm injection moulded plaques may be at most 20.0 % or below, preferably in the range of 8.0 - 20.0 %, more preferably in the range of 10.0 - 18.0 %.

The optomechanical ability (OMA) is the product of Flexural Modulus and Charpy notched impact strength, divided by value for Haze on 1 mm thick injection moulded plaques (Haze$_1$) as determined according to ASTM 1003 D.

The optomechanical ability (OMA) of the unimodal propylene random copolymer of the present invention may be in the range of 280 - 700, preferably in the range of 300 - 650, more preferably in the range of 300 - 600.

In a preferred embodiment, the unimodal propylene random copolymer of the present invention may be characterized by

a Flexural Modulus of in the range of 850 - 1250 MPa and/or

a Notched impact strength (Charpy NIS 23 °C) of at least 5.0 kJ/m$^2$ or higher and/or

a Haze$_1$ of at most 20.0 % or below and/or

optomechanical ability (OMA) in the range of 280 - 700.

In a preferred embodiment, the unimodal propylene random copolymer of the present invention may be characterized by a Notched impact strength (Charpy NIS 23 °C) of at least 5.0 kJ/m$^2$ or higher and any one or more of:

a Flexural Modulus of in the range of 850 - 1250 MPa and/or
a Haze$_1$ of at most 20.0 % or below and/or
optomechanical ability (OMA) in the range of 280 - 700.

It is particularly preferred that the unimodal propylene random copolymer of the present invention has

an optomechanical ability (OMA) in the range of 280 - 700 and

a Notched impact strength (Charpy NIS 23 °C) of at least 5.0 kJ/m$^2$ and

a Flexural Modulus of in the range of 850 - 1250 MPa and

Haze$_1$ of at most 20.0 % or below.


**Process**

In a special embodiment, the present invention covers a process for producing the unimodal propylene random copolymer of the present invention, comprising the following steps:

The unimodal propylene random copolymer according to this invention is preferably produced in a sequential polymerization process in the presence of a Ziegler-Natta catalyst as defined below.

Accordingly it is preferred that the unimodal propylene random copolymer is produced in the presence of

(a) a Ziegler-Natta catalyst (ZN-C) comprises a titanium compound (TC), a magnesium compound (MC) and an internal donor (ID), wherein said internal donor (ID) may comprise a succinate, a diether, or mixtures therefrom,
(b) optionally a co-catalyst (Co), and
(c) optionally an external donor (ED).

The unimodal propylene random copolymer may be produced in a sequential process comprising at least two reactors or in a one step polymerization process.

In the first reactor, a first fraction of the unimodal propylene random copolymer may be produced and subsequently transferred into the second reactor.

In the second reactor, the second fraction of the unimodal propylene random copolymer is produced in the presence of the first fraction of the unimodal propylene random copolymer.

The term "sequential polymerization system" indicates that the unimodal propylene random copolymer is produced in at least two reactors connected in series.

Accordingly the present polymerization system comprises at least a first polymerization reactor and a second polymerization reactor, and optionally a third polymerization reactor. The term "polymerization reactor" shall indicate that the main polymerization takes place. Thus in case the process consists of one or two polymerization reactors, this definition does not exclude the option that the overall system comprises for instance a pre-polymerization step in a pre polymerization reactor.

The term "consist of" is only a closing formulation in view of the main polymerization reactors.

Thus in case the process consists of one polymerization reactors, this definition does not exclude the option that the overall system comprises for instance a pre-polymerization step in a pre- polymerization reactor. The term "consist of" is only a closing formulation in view of the main polymerization reactor(s).

Preferably, at least one of the polymerization reactors is a slurry (loop) phase reactor. Alternatively preferred is, that sequential polymerization system comprises more than one, like two or more slurry (loop) reactors. Likewise preferred is that the polymerization system consists of one single (slurry) loop reactor.

In a preferred embodiment, the unimodal propylene random copolymer of the present invention is produced in one single reactor, preferably in one slurry

In a special embodiment, the present invention covers a process for producing the unimodal propylene random copolymer of the present invention, comprising the following steps:

a) polymerizing in a first single reactor, preferably a slurry reactor, monomers comprising propylene and ethylene in the presence of a Ziegler Natta catalyst system including a Ziegler Natta catalyst, preferably Basell Avant ZN180M, including an internal donor, and further including an organosilane as external donor, preferably dicyclopentyl dimethoxysilane (donor D), cyclohexyl trimethoxysilane (donor C) or tert.butyl dimethoxy(methyl)silane (donor T3) and triethylaluminium as cocatalyst,
to obtain a first propylene random copolymer fraction forming 50 - 100 wt.-% of the unimodal propylene random copolymer, and having

- a comonomer content in the range 2.0 - 5.0 wt.-% of ethylene as comonomer
- a Melt Flow Rate determined according to ISO1133 at 230 °C and 2.16 kg (MFR230/2.16) in the range of 8.0 - 60.0 g/10 min and
- a Comonomer Distribution (CD) at 25 % peak height of at least 13.0 K,

and wherein the polymerizing is done at a temperature of 50 to 90 °C and at a C2/C3 ratio of 20 to 65 mol/kmol,
b) optionally transferring said first propylene random copolymer fraction into a second reactor,
c) optionally polymerizing in said second reactor, preferably a slurry reactor, monomers comprising propylene and ethylene in the presence of the same Ziegler Natta catalyst system as defined for the first single reactor,
to obtain a second propylene random copolymer fraction forming 0 -50 wt.-% of the unimodal propylene random copolymer and having

- a comonomer content in the range 2.0 - 5.0 wt.-% of ethylene as comonomer
- a Melt Flow Rate determined according to ISO1133 at 230 °C and 2.16 kg (MFR230/2.16) in the range of 8.0 - 60.0 g/10 min and
- a Comonomer Distribution (CD) at 25 % peak height of at least 13.0 K,

wherein the polymerizing is done at a temperature of 50 to 90 °C and at a C2/C3 ratio of 20 to 65 mol/kmol, and
d) extruding the first fraction and optional second fraction in the presence of at least one nucleating agent to form the unimodal propylene random copolymer having
a comonomer content in the range 2.0 - 5.0 wt.-% of ethylene as comonomer
a Melt Flow Rate determined according to ISO1133 at 230 °C and 2.16 kg (MFR230/2.16) in the range of 8.0 - 60.0 g/10 min and a Comonomer Distribution (CD) at 25 % peak height of at least 13.0 K.

Preferably, the polymerization temperatures for each step may be chosen independently from each other and may be in the range of 50 - 90°, preferably 55 - 85°, more preferably in the range of 60 - 80 °C.
The comonomer ratio within the first and/or second polymerisation step may be - independently of each other - chosen and may be in the range of 20 - 65 mol/kmol, preferably in the range of 22 - 60 mol/kmol.
The propylene random copolymer fraction produced during the first polymerization step may form 50 - 100 wt.-% of the entire unimodal propylene random copolymer, preferably 60 - 100 wt.-%, such as more preferably 70 - 100 wt.-% of the entire unimodal propylene random copolymer.
Accordingly, the propylene random copolymer fraction produced during the second polymerization step may form 0 - 50 wt.-%, of the entire unimodal propylene random copolymer, preferably 0 - 40 wt.-%, more preferably 0 - 30 wt.-% of the entire unimodal propylene random copolymer.

The comonomer content of the propylene random copolymer fractions produced in the first or second polymerization step may be independently of each other - in the range of 2.0 - 5.0 wt.-%, preferably in the range of 2.3 - 4.7 wt.-%, more preferably in the range of 2.6 - 4.4 wt.-%.

The Melt Flow Rate (MFR 230/2.16) of the propylene random copolymer fraction produced in the first or second polymerization step may be - independently of each other - may be in the in the range of 8.0 - 60.0 g/10 min, preferably in the range of 9.0 - 55.0 g/10 min.

**Articles**

The present invention is concerned also with articles produced by injection moulding, stretch moulding, or injection stretch blow moulding. Articles produced by injection moulding are especially preferred.

The articles preferably are thin-walled articles having a wall thickness of 300 $\mu$m to 2 mm. More preferably the thin-walled articles have a wall thickness of 300 $\mu$m to 1400 $\mu$m, and even more preferably the thin-walled articles have a wall thickness of 300 $\mu$m to 900 $\mu$m. The articles of the current invention can be containers, such as cups, buckets, beakers, trays or parts of such articles, such as see-through-windows, lids, or the like.

The articles comprising the unimodal propylene random copolymer of the present invention may be used for packaging, alimentary, diagnostic or pharmaceutical purposes. The articles of the current invention are especially suitable for containing food, especially frozen food, such as ice-cream, frozen liquids, sauces, pre-cooked convenience products, and the like.

Articles of the current invention are also suitable for medical or diagnostic purposes, such as syringes, beaker, pipettes, etc.

It is, however, envisaged in the present invention, that the articles made of the unimodal propylene random copolymer of the present invention may comprise further ingredients, such as additives (stabilizers, lubricants, colorants) or polymeric modifiers. It is particularly preferred that the amount of polymeric modifiers is limited to at most 5 wt.-% of the total material.

The present invention will now be described in further detail by the examples provided below:

**Examples:**

**Measuring methods**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Xylene Cold Soluble**

Xylene Cold Soluble fraction at room temperature (XCS, wt.-%) is determined at 25 °C according to ISO 16152; 5th edition; 2005-07-01.

**Hexane soluble fraction (C6 FDA)**

The amount of hexane extractable polymer according to FDA method (federal registration, title 21, Chapter 1, part 177, section 1520, s. Annex B) was determined from films produced on a PM30 cast film extrusion line with about 220 °C melt temperature with L/D of 20 and a screw diameter of 30 mm (feed zone 4 D long, 5.8 mm deep, compression zone 10 D long, metering zone 6 D long, 2.3 mm deep utilising a screen pack 36 - 400 - 900 - 400 mesh/cm$^2$). A 200 mm die with a 0.55 to 0.60 mm die gap, screw speed: 50 r/min, and chill roll temperature of water: both rolls 40 °C (heating-cooling unit), Air gap: 0.5 mm, Air knife blower air supply: 1 bar. The film thickness is 100 $\mu$m. The amount of hexane soluble polymer is determined according to FDA method (federal registration, title 21, Chapter 1, part 177, section 1520, s. Annex B) from the film samples prepared as described above. The extraction was performed at a temperature of 50 °C and an extraction time of 2 hours.

**Glass transition temperature (Tg)**

The glass transition temperature (Tg) is determined by dynamic mechanical thermal analysis according to ISO 6721-7. The measurements are done in torsion mode on compression moulded samples (40x10x1 mm$^3$) between -100 °C and +150 °C with a heating rate of 2 °C/min and a frequency of 1 Hz.

**Differential scanning calorimetry (DSC)**

Differential scanning calorimetry (DSC) analysis, melting temperature ($T_m$) and melt enthalpy ($H_m$), crystalli-

zation temperature ($T_c$), and heat of crystallization ($H_c$, $H_{CR}$) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and heat of crystallization ($H_c$) are determined from the cooling step, while melting temperature ($T_m$) and melt enthalpy (Hm) are determined from the second heating step.

Throughout the patent the term Tc or (Tcr) is understood as Peak temperature of crystallization as determined by DSC at a cooling rate of 10 K/min.

**Flexural Modulus**

The flexural modulus was determined in 3-point-bending at +23 °C according to ISO 178 on 80x10x4 $mm^3$ test bars injection moulded in line with EN ISO 1873-2.

**Notched impact strength (NIS):**

The Charpy notched impact strength (NIS) was measured according to ISO 179 1eA at +23 °C, using injection moulded bar test specimens of 80x10x4 $mm^3$ prepared in accordance with EN ISO 1873-2.

**Haze**

Haze is determined according to ASTM D1003-00 on 60x60x1 $mm^3$ plaques injection moulded in line with EN ISO 1873-2 and indicated as $Haze_1$

**Optomechanical ability (OMA).**

The opto mechanical ability (OMA) is the product of Flexural Modulus and Charpy notched impact strength, divided by value for Haze on 1 mm thick injection moulded plaques ($Haze_1$)

$$OMA = \frac{\text{Flexural modulus [MPa]*NIS} \left[\frac{kJ}{m^2}\right]}{Haze_1[\%]} \quad \text{(I)}$$

**GPC**

Molecular weight averages, molecular weight distribution, and polydispersity index (Mn, Mw, Mw/Mn) Molecular weight averages (Mw, Mn, Mz), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474- 99. All samples were prepared by dissolving 5.0 - 9.0 mg of polymer in 8 mL (at 160 °C) of stabilized TCB (same as mobile phase) for 2.5 hours for PP or 3 hours for PE at max. 160 °C under continuous gentle shaking in the autosampler of the GPC instrument.

**Description of microstructure quantification by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^{1}H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma ))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \,[mol\%] = 100 * fE$$

The weight percent comonomer incorporation was calculated from the mole fraction:

$$E \,[wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

The relative content of isolated to block ethylene incorporation was calculated from the triad sequence distribution using the following relationship (equation (II)):

$$I(E) = \frac{fPEP}{(fEEE + fPEE + fPEP)} \times 100 \quad \textbf{(II)}$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample.

*Sequence order parameter description and quantification*

Sequence order parameter, $\chi$ as it is defined by Koenig (Spectroscopy of Polymers, Lack. L Koenig. American Chemical Society, Washington, DC 1992) (or "Koenig B-value" as it is named in WO 2010/078479 A1), yields information about whether the distribution of the structures is random, i.e. can be described by Bernoullian statistics, and whether it tends towards an alternating or block distribution. This parameter can be determined by the formula:

$$B_{Koenig} = fEP/(2*fE*fP) \quad (IV)$$

**Cross Fractionation Chromatography CFC (a-TREF x SEC)**

The chemical composition distribution as well as the determination of the molecular weight distribution and the corresponded molecular weight averages (Mn, Mw, Mz and Mv) at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the cross-fractionation chromatography (TREF x SEC). A four band IR5 infrared detector (PolymerChar, Valencia, Spain) was used to monitor the concentration. Around 40 mg of the polymer sample was dissolved in 25 ml TCB in the stainless steel vessel for 150 min at 150 °C. Once the sample was completely dissolved an aliquot of 0,5 ml was loaded into the TREF column and stabilized for a while at 110 °C. The polymer was crystallized and precipitate to a temperature of 30 °C by applying a constant cooling rate of 0.1 °C/min. A discontinuous elution process is performed using the following temperature steps: (30, 40, 50, 60, 70, 75, 80, 84, 88, 92, 95, 98, 100, 102, 104,106, 108, 110, 115, 120, 130 and 140).

In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert butyl-4-methyl-phenol) at 150 °C and a constant flow rate of 1 mL/min were applied. The column set was calibrated using universal calibration (according to ISO 16014-2:2003) with at least 15 narrow MWD polystyrene (PS) standards in the range of 0,5 kg/mol to 11 500 kg/mol. Following Mark Houwink constants were used to convert PS molecular weights into the PP molecular weight equivalents.

$$K_{PS} = 19 \times 10^{-3} \text{ mL/g}, \quad \alpha_{PS} = 0.655$$

$$K_{PP} = 19 \times 10^{-3} \text{ mL/g}, \quad \alpha_{PP} = 0.725$$

A third order polynomial fit was used to fit the calibration data. Data processing was performed using the software provided from PolymerChar with the CFC instrument.

**Comonomer Distribution (CD)**

Comonomer distribution (CD) is determined based on the CFC contour plot and the extracted a-TREF from the corresponding CFC analysis.

*Determination of $T_{80}$-$T_{20}$*

The broadness of the comonomer distribution can be estimated from the $T_{80}$-$T_{20}$ value. This can be determined by calculating the temperature difference between two specific elution temperatures in the TREF profile obtained by CFC analysis:

$T_{80}$ (elution temperature, at which 80 wt.-% of the polymer is eluting)

$T_{20}$ (elution temperature, at which 20 wt.-% of the polymer is eluting)

*Broadness of Elution Peak*

The broadness of elution peak at 25% of the peak height can be determined in the following way:

1. Determine the elution peak with the highest peak in the TREF fractogram
2. Calculate the peak width at quarter height in °C ($W_{1/4}$)

**Catalyst**

Commercial catalyst Basell Avant ZN180M was used for all inventive examples IE1 to IE3. In these Examples, the external donor C (Cyclohexyl trimethoxy silane, CAS 17865-54-2) was used.

The cocatalyst component used was triethylaluminium in all polymerizations. For the comparative examples CE1 to CE3 a Ziegler Natta catalyst with a phthalate-type internal donor and the external donor C (Cyclohexyl trimethoxy silane, CAS 17865-54-2) was used. For the comparative examples CE4 and CE5 a Ziegler Natta catalyst with a citraconate-type internal donor and the external donor D (Dicyclopentyl dimethoxy silane, CAS 126990-35-0) was used.

**Polymerization**

The polymerization conditions are listed in the Table below.

Examples IE1 to IE3 and CE1 to CE3 were stabilized with

0.1 wt.-% of Irganox B225 (1:1-blend of Irganox 1010 and Irgafos 168) of BASF AG, Germany) and

0.05 wt.-% calcium stearate.

1700 ppm Millad 3988 (1,3 : 2,4 Bis(3,4-dimethylbenzylidene) sorbitol) was used as the alpha nucleating agent in all cases,

IE3 and CE3 contained additionally 2 wt.-% of a nucleating-masterbatch being a propylene-homopolymer, MFR230/2.16 of 20 g/10 min and comprising ca. 200 ppm of a polymeric nucleating agent, namely PVCH.

The mixture of polymer and additives was extruded to pellets by using a Coperion ZSK 57 twin-screw extruder with an L/D ratio of the screw of 25 was used. A melt temperature profile of 180-200 °C was set, feeding the polymer powder under nitrogen atmosphere and pelletizing the final polymer after solidifying the melt strand in a wather bath. All properties were measured on thus additivated polymers.

The inventive examples IE1 to IE3 and comparative examples CE1 to CE3 were prepared in a Borstar PP pilot plant unit using only the loop reactor, for which conditions and settings can be found in Table 1 below. CE4 corresponds IE1 as disclosed in WO2016/135107 CE5 corresponds to IE1 as disclosed in EP17171704.

**Table 1 - Polymerization data**

|  |  | IE1 | IE2 | IE3 | CE1 | CE2 | CE3 |
|---|---|---|---|---|---|---|---|
| Catalyst |  | ZN 180M | ZN 180M | ZN 180M | ZN | ZN | ZN |
| Donor |  | C | C | C | C | C | C |
| TEAL feed | g/t(C3) | 170 | 170 | 170 | 170 | 170 | 170 |
| Al/donor ratio | mol/mol | 4 | 4 | 4 | 4 | 4 | 4 |
| **Prepolymerization** |  |  |  |  |  |  |  |
| Temperature | °C | 20 | 20 | 20 | 28 | 28 | 28 |
| Residence time | h | 0.33 | 0.33 | 0.33 | 0.33 | 0.33 | 0.33 |
| **Loop reactor** |  |  |  |  |  |  |  |
| Temperature | °C | 68 | 68 | 68 | 68 | 68 | 68 |
| Pressure | bar | 35 | 35 | 35 | 35 | 35 | 35 |
| H2/C3 ratio | mol/kmol | 23.5 | 20.0 | 34.0 | 36.0 | 26.5 | 56.0 |
| C2/C3 ratio | mol/kmol | 36.1 | 30.4 | 34.3 | 80.4 | 67.1 | 73.0 |
| Residence time | h | 0.5 | 0.5 | 0.5 | 0.5 | 0.5 | 0.5 |

**Material properties**

**Table 2 - Polymer properties**

|  |  | IE1 | IE2 | IE3 | CE1 | CE2 | CE3 | CE4 | CE5 |
|---|---|---|---|---|---|---|---|---|---|
| modality |  | mono | mono | mono | mono | mono | mono | bi | mono |
| MFR | g/10 min | 13 | 20 | 45 | 13 | 20 | 45 | 43 | 20 |
| Tc | °C | 120 | 120 | 122 | 119 | 121 | 124 | 120 | 119 |
| Tm1 | °C | 148 | 150 | 151 | 150 | 150 | 151 | 149 | 151 |
| Tm2 | °C | 136 | 135 | 136 | 139 | 138 | 137 | 138 | 138 |
| Hm1 | J/g | 24 | 27.6 | 28 | 28 | 32 | 34 | 64 | 30 |
| Hm2 | J/g | 57 | 56.5 | 56 | 62 | 61 | 61 | 30 | 69 |
| $\gamma$-phase (DSC) | % | 70.4 | 67.2 | 66.7 | 68.9 | 65.6 | 64.2 | 34.0 | n.d. |
| Mw | kg/ mol | 279 | 251 | 232 | 285 | 242 | 227 | 234 | 268 |
| Mw/Mn | - | 5.4 | 4.9 | 4.7 | 6.3 | 5.9 | 5.6 | 5.8 | 5.3 |
|  |  |  |  |  |  |  |  |  |  |
| XCS | wt% | 9.3 | 7.4 | 10.5 | 8.43 | 8.1 | 9.7 | 8.0 | 5.5 |
| C6 FDA | wt% | 3.2 | 3 | 4.1 | 2.7 | 2.9 | 4.4 | n.d. | n.d. |

**Table 3 - NMR characteristics**

| NMR |  | IE1 | IE2 | IE3 | CE1 | CE2 | CE3 | CE4 | CE5 |
|---|---|---|---|---|---|---|---|---|---|
| C2 | wt% | 4.2 | 3.4 | 3.0 | 4.1 | 3.5 | 3.7 | 4.8 | 3.85 |
| EEE | mol% | 0.58 | 0.52 | 0.61 | 0.66 | 0.59 | 0.53 | 0.47 | 0.63 |
| EEP | mol% | 1.43 | 0.99 | 0.61 | 1.28 | 1.06 | 1.52 | 1.16 | 1.06 |
| PEP | mol% | 4.09 | 3.68 | 4.08 | 3.56 | 3.56 | 3.79 | 3.21 | 3.75 |
| EPP | mol% | 8.53 | 6.98 | 7.67 | 8.00 | 7.62 | 7.37 | 7.2 | 7.85 |
| PPP | mol% | 85.24 | 87.57 | 87.03 | 86.00 | 86.83 | 86.5 | 87.88 | 86.24 |
| EPE | mol% | 0.23 | 0.26 | 0.00 | 0.37 | 0.34 | 0.34 | 0.35 | 0.32 |
| I (E) | % | 67.0 | 70.9 | 77.0 | 64.7 | 68.3 | 64.9 | 66.3 | 68.9 |
| 90.0 - 6 *C2 = |  | 64.8 | 69.6 | 72.0 | 65.5 | 69.0 | 67.8 | 61.2 | 66.9 |
| I (E) > 90.0 - 6*C2 ? |  | Y | Y | Y | N | N | N | Y | Y |
| Koenig B | - | 0.82 | 0.81 | 0.82 | 0.82 | 0.83 | 0.79 | n.d. | 0.82 |

**Table 4: TREF characteristics**

| TREF-CFC |  | IE1 | IE2 | IE3 | CE1 | CE2 | CE3 | CE4 | CE5 |
|---|---|---|---|---|---|---|---|---|---|
| CD : $\Delta$T @25% peak height | K | 13.8 | 13.4 | 20.6 | 16.5 | 16.2 | 25.4 | - | 12.5 |
| $T_{80}$-$T_{20}$ | K | 23.4 | 18.8 | 29.8 | 25.6 | 24.3 | 30.7 | n.d. | 19.9 |
| $Mz_{(30\,°C)}$/$Mz_{(106\,°C)}$ | kg/mol | 1.43 | 0.28 | 0.73 | 0.12 | 0.16 | 0.13 | n.d. | 0.4 |
| $Mz_{(30\,°C)}$ | kg/mol | 1434 | 211 | 480 | 114 | 87.1 | 81.5 | n.d. | 205 |

(continued)

| TREF-CFC | | IE1 | IE2 | IE3 | CE1 | CE2 | CE3 | CE4 | CE5 |
|---|---|---|---|---|---|---|---|---|---|
| Mz$_{(106\ °C)}$ | kg/mol | 999 | 745 | 655 | 908 | 554 | 616 | n.d. | 493 |
| | | | | | | | | | |
| MWD$_{(30\ °C)}$ | | 13.3 | 7.1 | 10.5 | 5.7 | 4.9 | 5.2 | n.d. | 7.6 |
| MWD$_{(106\ °C)}$ | | 2.9 | 2.7 | 3.0 | 3.0 | 2.5 | 3.1 | n.d. | 2.3 |
| Mw$_{(30\ °C)}$ | kg/mol | 82.6 | 33 | 51.4 | 31.1 | 23.9 | 20.2 | n.d. | 49.6 |
| Mw$_{(106\ °C)}$ | kg/mol | 382 | 286 | 240 | 362 | 252 | 244 | n.d. | 251 |
| MWD$_{(30\ °C)}$/MWD$_{(106\ °C)}$ | | 4.6 | 2.6 | 3.5 | 1.9 | 2.0 | 1.7 | n.d. | 3.3 |

**Table 5 Mechanical and optical properties**

| | | IE1 | IE2 | IE3 | CE1 | CE2 | CE3 | CE4 | CE5 |
|---|---|---|---|---|---|---|---|---|---|
| Flexural Modulus | MPa | 995 | 1113 | 1046 | 926 | 1073 | 1110 | *1087 \** | 980 |
| Charpy NIS 23 °C | kJ/m$^2$ | 6.1 | 5.4 | 5.22 | 5.3 | 5 | 3.6 | n.d. | 5.8 |
| Haze 1 mm | % | 16 | 17 | 17 | 23 | 20 | 21 | 13 | 20 |
| OMA\*\* | - | 379 | 354 | 321 | 213 | 268 | 190 | n.d. | 284 |
| *\* Tensile Modulus given for CE4.*<br>*\*\* OMA: Optomechanical ability* | | | | | | | | | |

From the tables above it is evident, that the unimodal propylene random copolymer of the present invention shows improved stiffness, improved impact and good optical behaviour in the sense of a low haze as well as improved optomechanical ability (OMA) and fulfills the object of the invention.

**Claims**

1. Unimodal polypropylene random copolymer having 2.0 - 5.0 wt.-% of ethylene as comonomer having a Melt Flow Rate determined according to ISO1133 at 230 °C and 2.16 kg (MFR230/2.16) in the range of 8.0 - 60.0 g/10 min and being **characterized by** a Comonomer Distribution (CD) at 25 % peak height of at least 13.0 K

2. Unimodal propylene random copolymer according to claim 1 having

   a. a relative content of isolated to block ethylene sequences, I(E), in the range of 65.0 to 80.0 % , wherein I(E) content [%] is defined by the following equation

$$I(E) = \frac{fPEP}{fEEE + f\,PEE + fPEP} * 100$$

   wherein

   I(E) is the relative content of isolated to block ethylene sequences in [%]; fPEP is the mol fraction of propylene/ethylene/propylene sequences (PEP) in the sample;
   fPEE is the mol fraction of propylene/ethylene/ethylene sequences (PEE) and of ethylene/ethylene/propylene sequences (EEP) in the sample;
   fEEE is the mol fraction of ethylene/ethylene/ethylene sequences (EEE) in the sample wherein all sequence concentrations being based on a statistical triad analysis of $^{13}$C-NMR data, and/or

   b. a relative content of isolated to block ethylene sequences, I(E), fulfilling the inequation:

$$I(E) > 90.0 - 6 * C2 \text{ [wt.-\%]}$$

wherein C2 denominates the comonomer content of the unimodal propylene random copolymer.

3. Unimodal propylene random copolymer according to any of the preceding claims wherein

   a. the ratio of the Mz values of the fractions eluting at 30 °C and 106 °C ($Mz_{(30 \, °C)}/Mz_{(106 \, °C)}$) is in the range of 0.20 - 2.00
   and/or
   b. the ratio of the MWD values of the fractions eluting at 30 °C and 106 °C ($MWD_{(30 \, °C)}/MWD_{(106 \, °C)}$) is in the range of 2.0 - 10.0.

4. Unimodal propylene random copolymer according to any of the preceding claims comprising a soluble nucleating agent, preferably 500 - 3000 ppm of a soluble nucleating agent.

5. Unimodal propylene random copolymer according to any of the preceding claims having a MWD of 3.5 - 6.5.

6. Unimodal propylene random copolymer according to any of the preceding claims having a fraction soluble in cold xylene (XCS) in the range of 6.5 - 13.0 wt.-%.

7. Unimodal propylene random copolymer according to any of the preceding claims having a melting temperature (Tm) of at most 155 °C

8. Unimodal propylene random copolymer according to any of the preceding claims having a

   a. Flexural Modulus of at least 850 MPa when measured according to ISO178 and/or
   b. a Charpy notched impact Strength (NIS) of at least 5.0 kJ/m$^2$ when measured according to ISO179/1 eA at +23 °C and/or
   c. a Haze$_1$ of at most 20.0 % when measured according to ASTM 1003 and/or
   d. an Optomechanical ability (OMA) of at least 280.

9. Use of the unimodal polypropylene random copolymer according to any of the preceding claims for producing injection moulded or extruded articles or packaging articles.

10. Article, such as injection moulded or extruded articles or packaging article, comprising the unimodal polypropylene random copolymer according to any of claims 1 to 8.

11. Use of the articles according to Claim 10 for packaging, alimentary, diagnostic or pharmaceutical purposes.

12. Process for producing the unimodal propylene random copolymer according to any of the claims 1 to 8, comprising the following steps

   a) polymerizing in a first single reactor, preferably a slurry reactor, monomers comprising propylene and ethylene in the presence of a Ziegler Natta catalyst system including a Ziegler Natta catalyst comprising an internal donor, and further including an organosilane as external donor and triethylaluminium as cocatalyst,
   at a temperature of 50 to 90 °C and at a C2/C3 ratio of 20 to 65 mol/kmol,
   to obtain a first propylene random copolymer fraction forming 50 - 100 wt.-% of the unimodal propylene random copolymer, and having

      - a comonomer content in the range 2.0 - 5.0 wt.-% of ethylene as comonomer
      - a Melt Flow Rate determined according to ISO1133 at 230 °C and 2.16 kg (MFR230/2.16) in the range of 8.0 - 60.0 g/10 min and
      - a Comonomer Distribution (CD) at 25 % peak height of at least 13.0 K,

   b) optionally transferring said first propylene random copolymer fraction into a second reactor,
   c) optionally polymerizing in said second reactor, preferably a slurry reactor, monomers comprising propylene and ethylene in the presence of the same Ziegler Natta catalyst system as defined for the first single reactor to obtain a second propylene random copolymer fraction forming 0 - 50 wt.-% of the unimodal propylene random copolymer and having

- a comonomer content in the range 2.0 - 5.0 wt.-% of ethylene as comonomer
- a Melt Flow Rate determined according to ISO1133 at 230 °C and 2.16 kg (MFR230/2.16) in the range of 8.0 - 60.0 g/10 min and
- a Comonomer Distribution (CD) at 25 % peak height of at least 13.0 K,

wherein the polymerizing is done at a temperature of 50 to 90 °C and at a C2/C3 ratio of 20 to 65 mol/kmol, and
d) extruding the first fraction and optional second fraction in the presence of at least one nucleating agent to form the unimodal propylene random copolymer having
a comonomer content in the range 2.0 - 5.0 wt.-% of ethylene as comonomer
a Melt Flow Rate determined according to ISO1133 at 230 °C and 2.16 kg (MFR230/2.16) in the range of 8.0 - 60.0 g/10 min and
a Comonomer Distribution (CD) at 25 % peak height of at least 13.0 K.

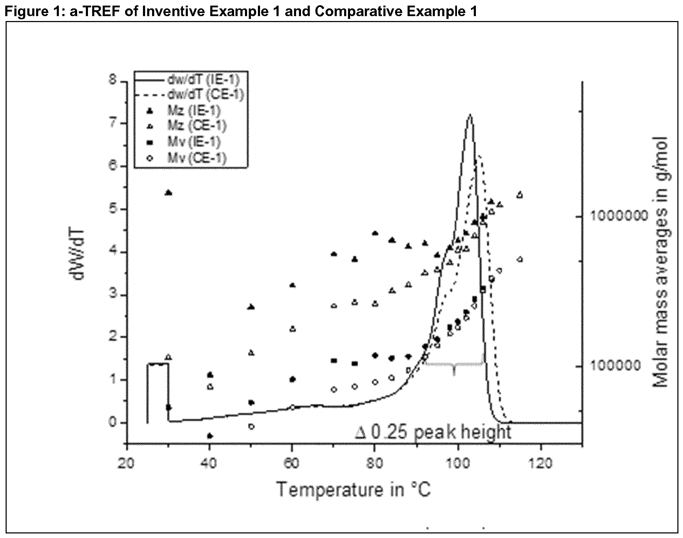

**Figure 1: a-TREF of Inventive Example 1 and Comparative Example 1**

Europäisches
Patentamt

European
Patent Office

Office européen
des brevets

# EUROPEAN SEARCH REPORT

Application Number

EP 18 19 1076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2018/210893 A1 (BOREALIS AG [AT]) 22 November 2018 (2018-11-22) * comparative example 1 (CE1), table 2 * * page 14, line 19 - line 28 * * claims 1,3,13,14 * ----- | 1,6,8-11 | INV. C08F210/06 ADD. C08F210/16 |
| E | WO 2019/002345 A1 (BOREALIS AG [AT]) 3 January 2019 (2019-01-03) * examples IE1-IE3 (second polymer fraction) in table 1 * * page 23, line 21 - line 28 * * claims 1,2,4,5 * ----- | 1,4,12 | |
| X | EP 2 610 274 A1 (BOREALIS AG [AT]) 3 July 2013 (2013-07-03) * examples 1,6; table 3 * ----- | 1,6 | |
| X | MARKUS GAHLEITNER ET AL: "Propylene-ethylene random copolymers: Comonomer effects on crystallinity and application properties : PP-Ethylene Random Copolymers", JOURNAL OF APPLIED POLYMER SCIENCE, vol. 95, no. 5, 11 January 2005 (2005-01-11), pages 1073-1081, XP055568807, US ISSN: 0021-8995, DOI: 10.1002/app.21308 * polymers RD204CF, RD226CF, RD208CF in table II * * page 1074, righ-hand column, "experimental" part, materials; page 1074, paragraph right-hand * ----- | 1,7-11 | |
| X | WO 2014/154610 A1 (BOREALIS AG [AT]) 2 October 2014 (2014-10-02) * comparative examples CE1, CE2 in table 1a * ----- | 1,5-7, 9-11 | |

**TECHNICAL FIELDS SEARCHED (IPC)**

C08F

The present search report has been drawn up for all claims

| Place of search | Date of completion of the search | Examiner |
|---|---|---|
| Munich | 13 March 2019 | Gamb, Véronique |

EPO FORM 1503 03.82 (P04C01)

## ANNEX TO THE EUROPEAN SEARCH REPORT
## ON EUROPEAN PATENT APPLICATION NO.

EP 18 19 1076

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2019

| Patent document cited in search report | | Publication date | Patent family member(s) | | Publication date |
|---|---|---|---|---|---|
| WO 2018210893 | A1 | 22-11-2018 | NONE | | |
| WO 2019002345 | A1 | 03-01-2019 | NONE | | |
| EP 2610274 | A1 | 03-07-2013 | BR 112014014954 | A2 | 13-06-2017 |
| | | | CN 104039845 | A | 10-09-2014 |
| | | | EP 2610274 | A1 | 03-07-2013 |
| | | | JP 5860552 | B2 | 16-02-2016 |
| | | | JP 2015506391 | A | 02-03-2015 |
| | | | KR 20140107598 | A | 04-09-2014 |
| | | | US 2014357816 | A1 | 04-12-2014 |
| | | | US 2017218104 | A1 | 03-08-2017 |
| | | | WO 2013098150 | A1 | 04-07-2013 |
| WO 2014154610 | A1 | 02-10-2014 | AU 2014243188 | A1 | 20-08-2015 |
| | | | CN 105143286 | A | 09-12-2015 |
| | | | EP 2978782 | A1 | 03-02-2016 |
| | | | ES 2651839 | T3 | 30-01-2018 |
| | | | KR 20150126682 | A | 12-11-2015 |
| | | | US 2016060371 | A1 | 03-03-2016 |
| | | | WO 2014154610 | A1 | 02-10-2014 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 17171704 A
- WO 2016135107 A
- WO 2016135108 A
- EP 2610274 A1
- EP 2999721 B1
- WO 2010078479 A1

**Non-patent literature cited in the description**

- *Chemical Reviews,* 2000, vol. 100 (4), 1316-1327
- **SINGH, G. ; KOTHARI, A. ; GUPTA, V.** *Polymer Testing,* 2009, vol. 28 5, 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- **LACK. L KOENIG.** Spectroscopy of Polymers. American Chemical Society, 1992
- **ORTIN A. ; MONRABAL B. ; SANCHO-TELLO J.** *Macromol. Symp.,* 2007, vol. 257, 13-28